# EUROPEAN PATENT APPLICATION

(11) **EP 4 378 734 A1**
(43) Date of publication of application: **05.06.2024**
(21) Application number: 23212231.7
(22) Date of filing: 27.11.2023
(51) Int. Cl.: B60K 11/08

(54) **AN ACTIVE GRILLE SHUTTER SYSTEM**

(30) Priority: 28.11.2022 IN 202241068194
(71) Applicant: VALEO SYSTEMES THERMIQUES, 78320 Le Mesnil Saint-Denis (FR)
(72) Inventor: CHODAPUNEEDI, Suryateja, 600130 Chennai (IN); TEMBHURNE, Mangesh, Troy, 48083 (US); MUNIRATHINAM, Balakumar, 600130 Chennai (IN); RAJENDRAN1, Praveenkumar, 600130 Chennai (IN)
(74) Representative: Valeo Systèmes Thermiques

(57) **Abstract**

An active grille shutter system (100) includes a frame (10) and vanes (20) disposed within the frame (10). Rotatable connection between the frame (10) and the vanes (20) permit angular movement the vanes (20) about longitudinal axis "X" thereof to define a blocking and an unblocking configuration thereof. The frame (10) includes at least one back support (12) disposed substantially orthogonal to the vanes (20) to prevent deflection of the vanes (20) in the direction of ram air. The back support (12) extends towards the vanes (20) and includes a plurality of bearing rods (12a) received in bearing cavities (22) formed on corresponding vanes (20). Each of the bearing cavity (20) encapsulates at least a portion of the periphery of corresponding bearing rod (12a). At least one of the bearing rod (12a) and the corresponding bearing cavity (22) configured with at least one of insertion assisting, locking and retention features.

## Description

### TECHNICAL FIELD

The present invention relates to a front-end module of a vehicle, more particularly, the present invention relates to an active grille shutter system for a vehicle.

### BACKGROUND

The active grille shutter system 1 is for controlling the air flow to at least one heat exchanger disposed downstream of the active grill shutter system 1.

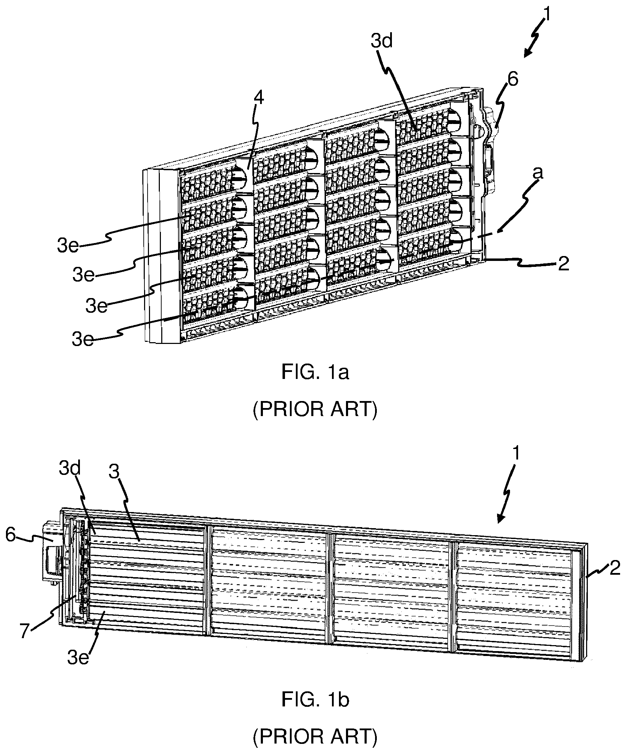

Referring to FIG. 1a - FIG. 1b of the accompanying drawings, the conventional active grille shutter system 1 includes a frame 2 and a plurality of vanes 3. The vanes 3 are rotatably connected to the frame 2, particularly, the extreme ends of the vanes 3 are rotatably connected to the frame 2 so that the vanes 3 rotate about the longitudinal axis "a" thereof when actuated by a drive to define an open configuration and a closed configuration thereof. Specifically, either one of a side actuator 6 or a central actuator actuates angular movement of at least one of the drive vanes 3d. The at least one drive vane 3d is connected to the driven vanes 3e by interconnecting linkages 7 to cause angular movement of all the driven vanes 3e together with the drive vanes 3d. In the open configuration, the vanes 3 allow air-flow across the active grille shutter system 1 to a heat exchanger disposed downstream the active grille shutter system 1 in direction of ram air. In the closed configuration, the vanes 3 block air-flow across the active grille shutter system 1 to the heat exchanger.

The ram air impinging on the vanes 3 of the active grille shutter system 1 may cause deflection of the vanes 3, causing gaps between the adjacent vanes 3, thereby leading to leakage of the air through the gaps. Particularly, as the vanes 3 being flexible and long, the vane 3 are prone to deflection, particularly, at the center of the vanes 3 due to frontal loads and uncontrolled air-flow across the gaps between adjacent vanes 3 defeat the purpose of the active grill shutter system 1. In order to prevent deflection of the vanes, intermediate bearing clamps 4 are disposed between the vanes 3. The intermediate bearing clamps 4 not only provide bearing support to the vane shaft but also try to securely hold the vanes 3 to avoid deflection thereof. However, the intermediate bearing clamps 4 cause the vanes 3 to be axially discontinuous along the longitudinal axis thereof, thereby rendering the vanes 3 ineffective in preventing air leakage through the active grille shutter system 1. Further, the vanes 3 of the conventional active grille shutter system 1 are prone to mechanical failures because of the frontal loads and the vanes 3 being unsupported from the back. Further, the conventional active grille shutter system 1 fails to securely hold the vanes 3 in position defining the blocking or unblocking configuration thereof. Also, the failure to securely hold the vanes in position defining the blocking and unblocking configuration thereof cause vibration and rattling noise issues. Still further, the conventional active grille shutter system 1 involves more number of components and is not reliable. Furthermore, the conventional active grille shutter system involves more bearing contact between the vane shaft and the intermediate bearing clamps 4, thereby causing frictional losses and rendering the active grille shutter system inefficient.

Accordingly, there is a need for an active grille shutter system configured with back support features that provide rigidity to the vanes to withstand frontal loads and avoid deflection of the vanes. Further, there is a need for an active grille shutter system that is effective in preventing air leakage through the active grille shutter system. Furthermore, there is a need for an active grille shutter system that reduces bearing contact and frictional losses to render the AGS efficient. Furthermore, there is a need for an active grille shutter system that ensures Further, there is a need for an active grille shutter system that involves fewer number of components and is reliable.

### SUMMARY

An active grille shutter system is disclosed in accordance with an embodiment of the present invention. The active grille shutter system includes a frame and a plurality of vanes disposed within the frame. Rotatable connection between the frame and the vanes permit angular movement the vanes about longitudinal axis "X" thereof, when actuated by an actuator to define a blocking and an unblocking configuration. In the blocking configuration, the vanes substantially blocks air flow to a heat exchanger disposed downstream of the active grille shutter system in direction of ram air. In the unblocking configuration, the vanes permit and control the air flow to the heat exchanger. The frame includes at least one back support disposed substantially orthogonally with respect to the vanes to prevent deflection of the vanes in the direction "R" of ram air. The back support extends towards the vanes and includes a plurality of bearing rods received in bearing cavities formed on the corresponding vanes. Each of the bearing cavity encapsulates at least a portion of the periphery of corresponding bearing rod. At least one of the bearing rod and the corresponding bearing cavity configured with at least one of insertion assisting, locking and retention features.

Particularly, the back support extends between and connects longitudinal side panels defining the frame.

Specifically, the back support includes the bearing rods, a main rib and connecting portions extending from the main rib towards the corresponding vanes and connecting the main rib to the bearing rods.

Generally, the vane angularly moves relative to the corresponding bearing rod as the vane angularly moves between blocking and unblocking configuration thereof.

Further, at least one of the bearing cavity includes at least one lip configured on either side of open side of the bearing cavity and serving as retention feature that urges and retains the bearing rod within the corresponding bearing cavity and prevents escape of the bearing rod through an entry passage defined by the lip.

Also, the bearing rod includes a notch that passes through the entry passage to facilitate insertion and receiving of the bearing rod in the corresponding bearing cavity.

Further, the notch interacts with corresponding bearing cavity to lock the vane in different positions defining the blocking and unblocking configuration of the vanes respectively.

Generally, the bearing rods are complimentary to the corresponding bearing cavities.

Preferably, the bearing rods are coaxial with respect to the corresponding rotatable connections between the vanes and frame formed by pins and holes configured on extreme ends of the vanes and the frame respectively.

Particularly, the bearing cavities are comparatively longer than the corresponding bearing rods.

Preferably, the connecting portion is having a converging section that is converging from the main rib to the respective bearing rod.

### BRIEF DESCRIPTION

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG. 1a - FIG. 1b illustrates front and rear isometric views of a conventional active grille shutter system configured with intermediate bearing clamps;
FIG. 2a illustrates an isometric back view of an active grille shutter system in accordance with an embodiment of the present invention;
FIG. 2b illustrates an isometric front view of an active grille shutter system;
FIG. 3 illustrates an exploded view of the active grille shutter system of FIG. 2b;

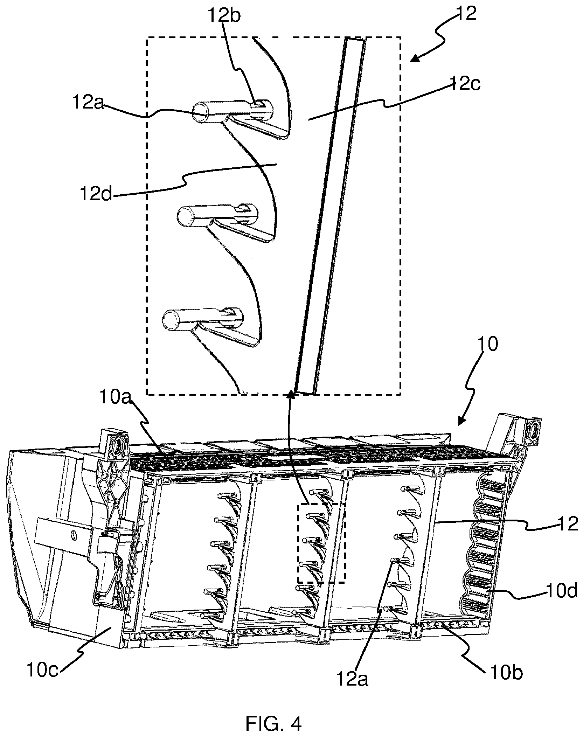

FIG. 4 illustrates an isometric view of a frame of the active grille shutter system of FIG. 2b with multiple back supports integrally formed therewith, also is illustrated an enlarged view of a portion of one of the back supports;
FIG. 5 illustrates an isometric view of one of the vanes of the active grille shutter system of FIG. 2b, also is illustrated an enlarged view depicting a portion of the vane configured with a bearing cavity for receiving a bearing rod;
FIG. 6 illustrates a schematic representation depicting vanes mounted on the respective bearing rods; and

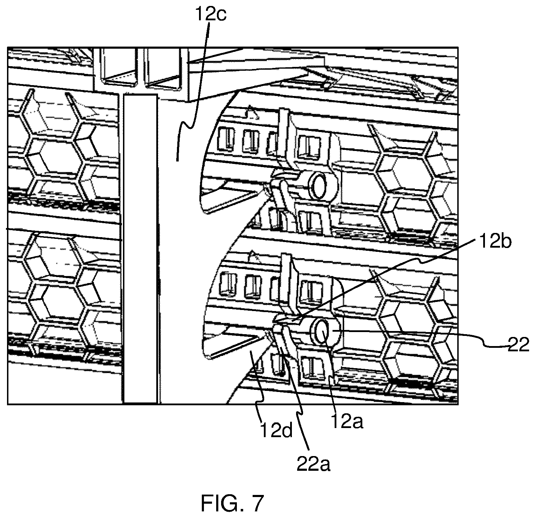

FIG. 7 illustrates the bearing rods received inside corresponding bearing cavities, while the vanes are in blocking configuration.
FIG. 8 illustrates the bearing rods received inside corresponding bearing cavities, while the vanes are in unblocking configuration.

### DETAILED DESCRIPTION

The active grille shutter system of the present invention includes a frame and vanes. The vanes angularly move about a longitudinal axis thereof between a blocking configuration and unblocking configuration thereof, when actuated by an actuator. The frame includes at least one back support integrally formed therewith. The back support extends between and connects longitudinal sides of the frame. The back support provides rigidity to the vanes to withstand frontal loads and protects the vanes against deflection, thereby preventing gaps between adjacent vanes and leakage through such gaps. More specifically, each of the back supports includes a bearing rod, a main rib and connecting portions connecting the bearing rods to the main rib. The bearing rods not only acts as a bearing support for the vanes but are also urged against the vanes to act as a back support to the vanes for providing rigidity to the vanes and enable the vanes withstand frontal loads and prevent vane deflection. Each of the vanes includes bearing cavities, each bearing cavity encapsulates a portion of the periphery of the corresponding bearing rod instead of encapsulating the entire periphery of the bearing rod. At least one of the bearing cavities and the corresponding bearing rods are configured with at least one of insertion facilitation features and retention features. The insertion facilitation feature facilitates insertion of the bearing rod in the corresponding bearing cavity, whereas the retention feature retains the bearing rod inside the corresponding bearing cavity in spite of the bearing cavity being an open cavity and irrespective of the operative configuration of the vane. Particularly, the bearing rod is formed with a notch to facilitate insertion of the rod into the bearing cavity and the bearing cavity includes a lip portion extending from at least one side of the open side of the bearing cavity to define an entry passage for facilitating entry of the bearing rod into the bearing cavity.

Although the present invention is explained with example of the active grille shutter system, however, the present invention is also applicable in vehicular and non-vehicular applications where it is required to provide reinforcement to the angularly moving components held within a frame and subjected to frontal loads. Particularly, the present invention finds application where angularly moving components subjected to frontal loads are supported on bearing elements that perform additional function of providing back support to the angularly moving components to withstand frontal loads to prevent gaps between adjacent angularly moving components. More specifically, the present invention is applicable in applications where the bearing elements are held in open cavities formed on the respective angularly moving components and are required to be conveniently inserted and retained inside the corresponding open cavities and prevented from escaping from the corresponding open cavities irrespective of the operative configuration of thereof.

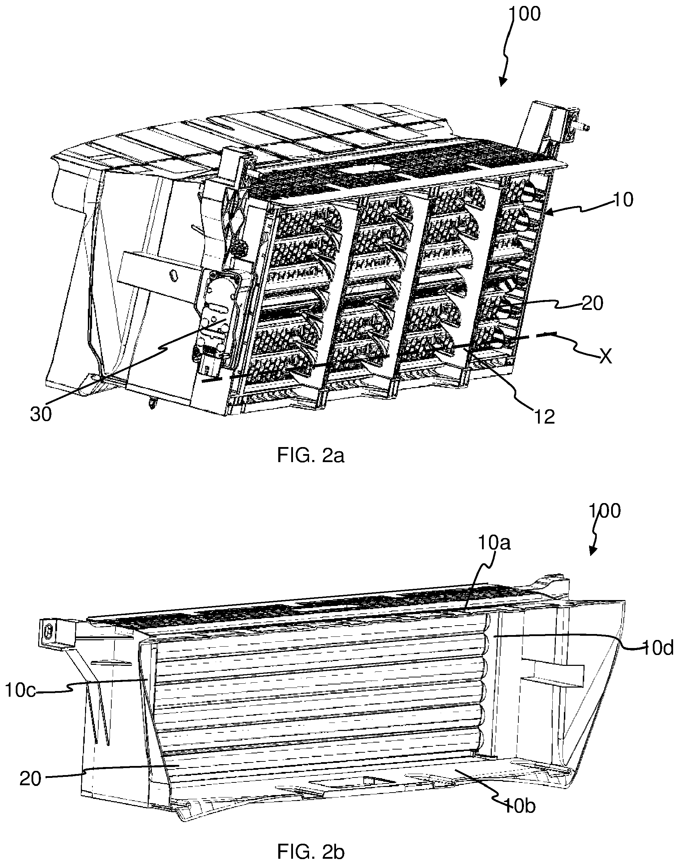

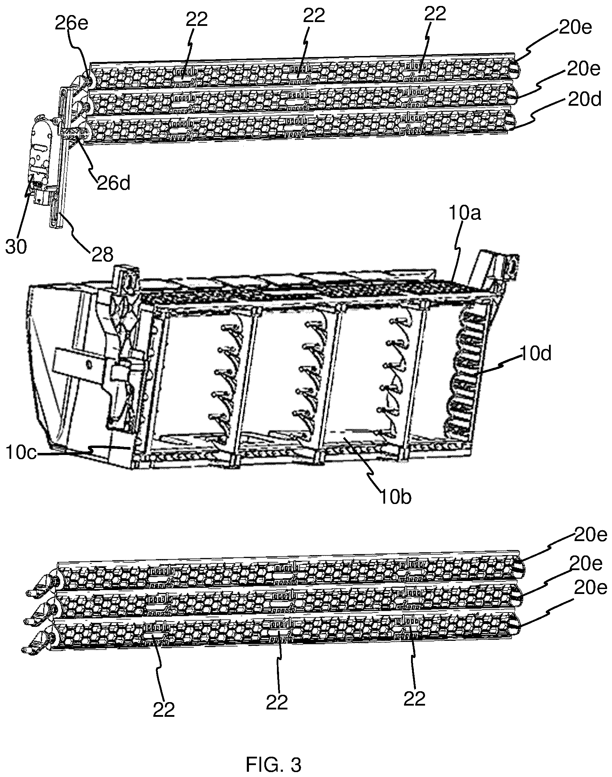

An active grille shutter system 100 is disclosed in accordance with an embodiment of the present invention. FIG. 2a and FIG. 2b illustrate an isometric back view and isometric front view of the active grille shutter system 100 with one of the vanes in partially open configuration. FIG. 3 illustrates and exploded view of the active grille shutter system 100. The active grille shutter system 100 includes a frame 10 and a plurality of vanes 20 disposed within the frame 10. The extreme ends of the vanes 20 are connected to the frame 10 by rotatable connections. The extreme ends of the vanes 20 further includes guard discs for preventing leakage through the rotatable connections between the extreme ends of the vanes 20 and the frame 10. The rotatable connection between the frame 10 and the vanes 20 permit angular movement the vanes 20 about longitudinal axis "X" thereof when actuated by an actuator 30 to define a blocking and an unblocking configuration of the vanes. More specifically, referring to the FIG. 3, at least one of the vanes 20, referred to as the driving vane 20d is functionally coupled to the actuator 30 via a driving vane shaft 26d to cause angular movement thereof. The other vanes referred to as driven vanes 20e are functionally coupled to and driven by the driving vane 20d through a kinematic linkage 28. More specifically, the driven vane shafts 26e derive angular motion from the driving vane shaft 26d through the kinematic linkage 28. With such configuration, the driving vanes 20d and the driven vanes 20e angularly move together. In the blocking configuration, the vanes 20 substantially blocks air flow to a heat exchanger disposed downstream of the active grille shutter system 100 in direction of ram air. Further, in the blocking configuration of the vanes, edges of the adjacent vanes are overlapping with each prevent any gaps and leakage through gaps between adjacent vanes. In the unblocking configuration, the vanes 20 permit and control the air flow to the heat exchanger.

FIG. 3 illustrates an isometric view of the frame 10. The frame 10 includes a pair of oppositely disposed longitudinal panels 10a and 10b and pair of oppositely disposed side panels 10c and 10d that are all interconnected to each other. The frame 10 further includes at least one back support 12. Generally, the frame 10 includes multiple back supports 12 that are disposed parallel to each other between and parallel to the side panels 10c and 10d. The frame 10 is generally formed of plastic material and by molding. The back supports 12 are integrally formed with the frame 10 and formed along with the frame 10 during the molding of the frame 10. The back supports 12 extend between and connects longitudinal side panels defining the frame 10. Preferably, the back supports 12 are disposed substantially orthogonally with respect to the vanes 20 to provide rigidity to the vanes 20 and prevent deflection of the vanes 20 in the direction "R" of ram air. The back supports 12 are either uniformly or non-uniformly spaced with respect to each other and parallel to each other. With such configuration each vane 20 is supported at regular intervals by different bearing rods 12a of the spaced apart back supports 12. The back support 12 extends towards the vanes 20 and includes a plurality of bearing rods 12a arranged in spaced apart configuration along the length of the back support 12. The bearing rods 12a are capable of being received in bearing cavities 22 formed on corresponding vanes 20. The frame 10 and the back supports 12 includes ribs formed thereon to provide reinforcement thereto. The back supports 12 are reinforced with extra material at the ends thereof where the back supports 12 are connected to the frame 10. The frame 10 and the back support further includes apertures to render the overall frame 10 lighter in weight. The present invention is not limited to any particular configuration, placement and number of the back supports 12, as far as the back supports 12 are capable of providing rigidity to vanes and enable the withstand frontal loads due to ram air impinging on the vanes 20.

Specifically, each of the back support 12 includes the bearing rods 12a, a main rib 12c and connecting portions 12d extending from the main rib 12c towards the corresponding vanes 20 and connecting the main rib 12c to the bearing rods 12a. The bearing rods 12a are aligned to the corresponding vanes 20 rotatable supported at the ends of the vanes 20 and between the opposite side panels 20c and 20d of the frame 20. The bearing rods 12a are received and held in the bearing cavities 22 of the corresponding vanes 20. With such configuration, each of the vanes 20 angularly moves relative to the corresponding bearing rods 12a as the vane 20 angularly moves between blocking and unblocking configuration thereof. The bearing rods 12a are complimentary to the corresponding bearing cavities 22. The bearing rods 12a are coaxial with respect to the corresponding rotatable connections between the vanes 20 and the frame 10 formed by pins and holes configured on extreme ends of the vanes 20 and the frame 10 respectively. The connecting portions 12d are having a converging section that is converging from the main rib 12c to the respective bearing rods 12a.The bearing rod 12a further includes a notch 12b.

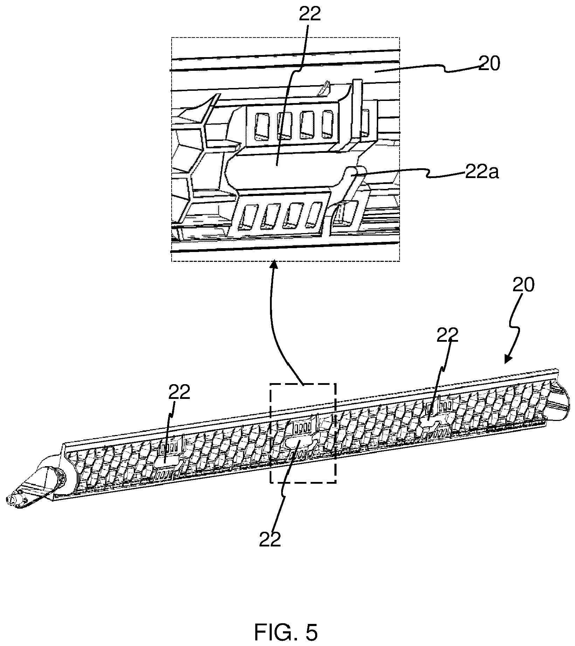

Each of the vanes 20 include the bearing cavities 22 configured on back side thereof. The bearing cavities 22 are arranged in spaced apart configuration with respect to each other along a longitudinal axis of the vane 20. The number of the bearing cavities 22 and the spacing between the bearing cavities 22 on the vane 20 is corresponding to the number and placement of the back supports 12 formed on the frame 10. Specifically, each of the vanes 20 include as many bearing cavities 22 as is the number of the back supports 12 formed on the frame 10. For example, referring to the FIG. 5 the vane 12 includes three bearing cavities 22, one bearing cavity 22 corresponding to and aligned with one back support 12 of the three back supports 12 of the frame 10. Each of the bearing cavity 22 is an open cavity and encapsulates at least a portion of the periphery of the corresponding bearing rod 12a instead of encapsulating entire periphery of the bearing rod 12a. Further, the bearing rods 12a extending from the main rib 12c of the back support 12 are securely held in the corresponding bearing cavities 22. The bearing cavities 22 are comparatively longer than the corresponding bearing rods 12a. With the main rib 12c being fixed at both ends thereof to the frame 10 and the bearing rods extending from the main rib 12c and securely held in the corresponding bearing cavities 22, the bearing rods 12a urge the vanes against the ram air and enables the vanes 20 to withstand frontal loads of the ram air. The bearing cavity 22 being open cavity defines an entry passage 24a for the entry of the bearing rod 12a within the bearing cavity 22. Such configuration of bearing cavity 22 being open cavity reduces the bearing contact and frictional losses, thereby rendering the active grille shutter system efficient. In order to insert the bearing rod 12a in the bearing cavity 22, the notch 12b on the bearing rod 12a is aligned with the entry passage 24a and the bearing rod 12a is turned to facilitate insertion of the bearing rod 12a in the respective bearing cavity 22.

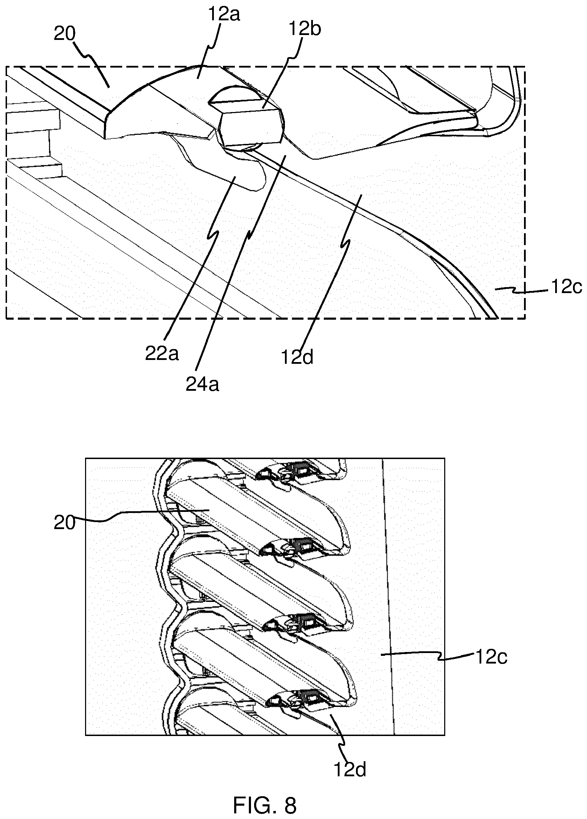

The bearing rods 12a are urged against the corresponding vanes 20 to provide rigidity to the vanes 20 to enable the vanes 20 to withstand frontal loads and prevent deflection thereof. Accordingly, the bearing rods 12a perform dual function of acting as a bearing for angular movement of the vanes 20 there around and providing back support for the vanes 20. However, due to open configuration of the bearing cavities 22, the bearing rods 12a are prone to escape out of the respective bearing cavities 22, particularly, when the vanes 20 are in the unblocking configuration thereof as illustrated in FIG. 8. In order to facilitate insertion of bearing rods 12a in the corresponding bearing cavities 22 and retention of the bearing rods 12a in the bearing cavities 22, at least one of the bearing rods 12a and the corresponding bearing cavities 22 are configured with at least one of insertion assisting and retention features.

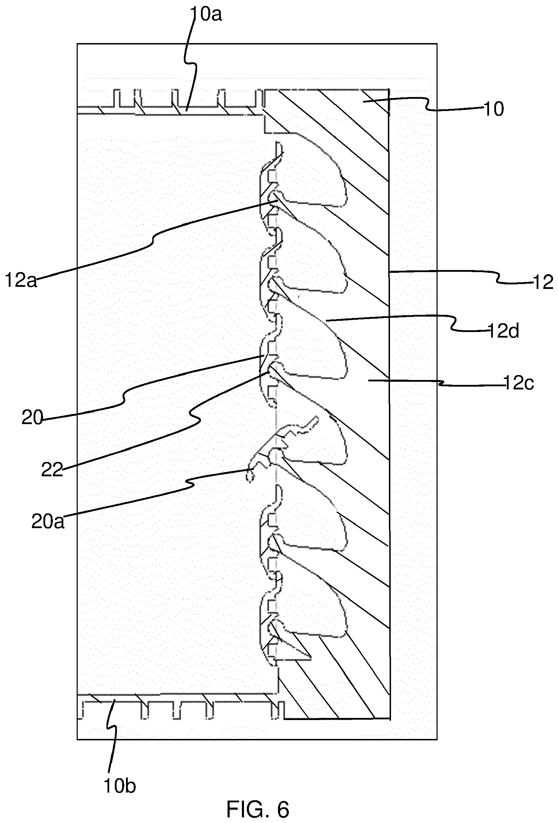

At least one of the bearing cavity 20 includes at least one lip portion 22a configured on either side of the open side of the bearing cavity 20 that serves as retention feature. The at least one lip portion 22a urges and retains the bearing rod 12a within the corresponding bearing cavity 20 and prevents escape of the bearing rod 12a through an entry passage 24a defined by the lip portion 22a irrespective of the operating configuration of the vanes 20. However, the lip portion 22a is particularly useful in retaining the bearing rod 12a in the corresponding bearing cavity 22, when the vanes 20 are in the unblocking configuration as illustrated in FIG. 8. The insertion assisting feature is in the form of notches 12b formed on the bearing rods 12a. The notch 12b is generally formed proximal to a free end of the bearing rod 12a. The notch 12b formed on the bearing rod 12a is having dimension less than the entry passage 24a to facilitate insertion and receiving of the bearing rod 12a in the corresponding bearing cavity 22. Further, the notch 12b interacts with corresponding bearing cavity 22 to lock the vane 20 in different positions defining the blocking and unblocking configuration of the vanes 20 respectively. As illustrated in FIG, 7 the notch 12b includes cutouts on both sides of the bearing rod 12a and the portion of the notch 12b between the cutouts interacts with the lip portion 22a and inside wall of the bearing cavity 22 that is diametrically opposite to the lip portion 22a to firmly grip the bearing rod 12a in position. Such configuration of the notch 12b facilitates in securely holding of the vane 20 in position to define either the blocking configuration of the vane or the unblocking configuration of the vane 20.With such configuration of the notch 12b locking the vanes 20 in positions defining the blocking and un-blocking configurations of the vanes 20, the chances of slipping of vane from blocking configuration to unblocking configuration or from unblocking configuration to blocking configuration is avoided. The notch 12b further reduces the bearing contact between the bearing rod 12a and the bearing cavity 22. FIG. 6 illustrates a schematic representation depicting vanes 20 mounted on the respective bearing rods 12a, wherein all the vanes 20 are held in blocking configuration except one vane 20a.

In any case, the invention cannot and should not be limited to the embodiments specifically described in this document, as other embodiments might exist. The invention shall spread to any equivalent means and any technically operating combination of means.

## Claims

1. An active grille shutter system (100) comprising:
• a frame (10);
• a plurality of vanes (20) disposed within the frame (10),
rotatable connection between the frame (10) and the vanes (20) to permit angular movement the vanes (20) about longitudinal axis "X" thereof when actuated by an actuator to define a blocking and an unblocking configuration,
**characterized in that** the frame (10) comprises at least one back support (12) disposed substantially orthogonally with respect to the vanes (20) and adapted to prevent deflection of the vanes (20) in the direction "R" of ram air, the back support (12) extends towards the vanes (20) and comprising a plurality of bearing rods (12a) adapted to be received in bearing cavities (22) formed on corresponding vanes (20), each of the bearing cavity (22) encapsulates at least a portion of the periphery of the corresponding bearing rod (12a), at least one of the bearing rod (12a) and the corresponding bearing cavity (22) configured with at least one of insertion assisting, locking and retention features.

2. The active grille shutter system (100) as claimed in any of the preceding claims, wherein the back support (12) extends between and connects longitudinal side panels (10a) and (10b) defining the frame (10).

3. The active grille shutter system (100) as claimed in any of the preceding claims, wherein the back support (12) comprises the bearing rods (12a), a main rib (12c) and connecting portions (12d) extending from the main rib (12c) towards the corresponding vanes (20) and connecting the main rib (12c) to the bearing rods (12a).

4. The active grille shutter system (100) as claimed in any of the preceding claims, wherein the vane (20) is adapted to angularly move relative to the corresponding bearing rod (12a) as the vane (20) angularly moves between blocking and unblocking configuration thereof.

5. The active grille shutter system (100) as claimed in any of the preceding claims, wherein at least one of the bearing cavity (22) comprises at least one lip portion (22a) configured on either side of open side of the bearing cavity and serving as retention feature and adapted to urge and retain the bearing rod (12a) within the corresponding bearing cavity (22) and prevent escape of the bearing rod (12a) through an entry passage (24a) defined by the lip portion (22a).

6. The active grille shutter system (100) as claimed in the previous claim, wherein the bearing rod (12a) comprises a notch (12b) that is adapted to pass through the entry passage (24a) to facilitate insertion and receiving of the bearing rod (12a) in the corresponding bearing cavity (22).

7. The active grille shutter system (100) as claimed in the previous claim, wherein the notch (12b) further adapted to interact with corresponding bearing cavity (22) to lock the vane (20) in different positions defining the blocking and unblocking configuration of the vanes (20) respectively.

8. The active grille shutter system (100) as claimed in any of the preceding claims, wherein the bearing rods (12a) are complimentary to the corresponding bearing cavities (22).

9. The active grille shutter system (100) as claimed in any of the preceding claims, the bearing rods (12a) are coaxial with respect to the corresponding rotatable connections between the vanes (20) and the frame (10) formed by pins and holes configured on extreme ends of the vanes (20) and the frame (10) respectively.

10. The active grille shutter system (100) as claimed in any of the preceding claims, wherein the bearing cavities (22) are comparatively longer than the corresponding bearing rods (12a).

11. The active grille shutter system (100) as claimed in the claim 4, wherein the connecting portion (12d) is having a converging section that is converging from the main rib (12c) to the respective bearing rod (12a).
